# EUROPEAN PATENT APPLICATION

(11) **EP 3 429 267 A1**
(43) Date of publication of application: **16.01.2019**
(21) Application number: 16896091.2
(22) Date of filing: 01.04.2016
(51) Int. Cl.: H04W 36/00, H04W 76/18, H04W 40/22, H04W 36/30, H04W 36/32, H04W 8/00, H04W 88/04

(54) **COMMUNICATION METHOD, AND RELEVANT DEVICE**

(71) Applicant: Huawei Technologies Co., Ltd., Longgang District Shenzhen, Guangdong 518129 (CN)
(72) Inventor: WANG, Hong, Shenzhen Guangdong 518129 (CN); CHAI, Li, Shenzhen Guangdong 518129 (CN); ZHANG, Jian, Shenzhen Guangdong 518129 (CN); QUAN, Wei, Shenzhen Guangdong 518129 (CN)
(74) Representative: Gill Jennings & Every LLP
(86) International application number: PCT/CN2016/078376
(87) International publication number: WO 2017/166312

(57) **Abstract**

Embodiments of the present invention disclose a communication method and a related device. The method may include the following: After a connection failure, a first user equipment may send a first indication message to a first network device through a communications interface (namely, a target interface) between terminal devices, so that the first network device proactively sends context information of the first user equipment to a second network device that serves a cell to which the first user equipment may be reconnected. In this way, when a connection failure occurs, the user equipment may instruct a source network device to push context information of the user equipment in advance, so that a network device serving the cell for reestablishment does not need to obtain the context information by sending a request for obtaining context information to the source network device during connection re-establishment. Therefore, a communication delay between network devices and signaling overheads on an X2 interface can be reduced to some extent.

## Description

### TECHNICAL FIELD

Embodiments of the present invention relate to the field of communications technologies, and specifically, to a communication method and a related device.

### BACKGROUND

A device-to-device (Device-to-Device, D2D) communications technology is a technology in which data transmission between user equipments (User Equipment, UE) can be performed directly through a communications interface (which may be referred to as a PC5 interface) between terminal devices.

In a cellular mobile communications system, communication between a UE and a base station is performed through a Uu interface (a communications interface between the UE and a Universal Mobile Telecommunications System terrestrial radio access network (UMTS Terrestrial Radio Access Network, UTRAN)). After a radio link failure (Radio Link Failure, RLF) or a cell handover failure (Handover Failure, HOF), the UE re-establishes a connection. In a connection re-establishment process, UE (briefly referred to as an edge user) located on a coverage edge of a source base station easily reconnects to a neighboring base station. If the neighboring base station does not have context information of the edge user, the neighboring base station needs to obtain the context information from the source base station, to implement the connection to the edge user. When the neighboring base station obtains the context information of the user from the source base station, a delay and signaling overheads during the connection establishment between the edge user and the neighboring base station are increased. In addition, because there is a delay in a signal transmission process, to ensure that a base station can correctly receive a signal sent by UE, the UE obtains an uplink timing (in other words, timing advance, TA) value from the base station, and advances a time of TA to send data to the base station, to ensure that the base station can receive the data punctually. In the prior art, when initially obtaining the TA value, the UE sends a sequence to the base station, and the base station indicates the TA value of the UE based on the received sequence. Because a movement of the UE causes the TA value of the UE to change, the UE needs to continually obtain the TA value from the base station.

It can be learned that a communication mode of a UE depends on a system network, regardless of whether the UE re-establishes a connection or obtains the uplink timing. If a current network is relatively congested, a communication delay and signaling overheads of the UE are increased.

### SUMMARY

Embodiments of the present invention disclose a communication method and a related device, to resolve a problem that a communication delay and signaling overheads are relatively high.

When a first user equipment fails to be connected to a first network device through a Uu interface and the first user equipment needs to establish a connection to a second network device, a first aspect of the embodiments of the present invention discloses a communication method, and the method may include the following:

The first user equipment may send a first indication message to the first network device, so that the first network device sends context information of the first user equipment to the second network device. The first indication message is used to indicate that a connection failure occurs on the first user equipment, and the context information is used for establishing the connection between the second network device and the first user equipment. In this way, after receiving the context information and a connection establishment request of the first user equipment, the second network device can quickly establish the connection to the first user equipment.

When a connection failure occurs, a user equipment may instruct a source network device to push context information of the user equipment in advance, so that a network device serving a cell for reestablishment does not need to obtain the context information by sending a request for obtaining context information to the source network device during connection re-establishment. Therefore, a communication delay between network devices and signaling overheads on an X2 interface can be reduced to some extent.

Optionally, that the first user equipment sends a first indication message to the first network device may include the following:

The first user equipment may send the first indication message to the first network device through a target interface; or may broadcast the first indication message through a target interface, to instruct a second user equipment to forward the first indication message to the first network device. A destination node of the first indication message is the first network device, the second user equipment is a user equipment connected to the first network device, and the target interface is a communications interface, for example, a PC5 interface, between terminal devices.

Optionally, that the first user equipment broadcasts the first indication message through a target interface may include the following:

The first user equipment may broadcast the first indication message at a specified power through the target interface, so that the first indication message is received by user equipment within a preset distance range.

Broadcasting at the specified power may enable another user equipment within a specific distance range to receive the first indication message. This can indicate, to the another user equipment that can receive the first indication message, that a connection failure may occur, so that the another user equipment can perform cell handover in advance.

Optionally, when the first indication message includes a measurement report of the first user equipment, the second network device may be a network device that is determined by the first network device based on the measurement report and that serves a candidate cell for reestablishment of the first user equipment; or when the first indication message includes an identifier of a cell for reestablishment of the first user equipment, the second network device may be a network device serving a cell for reestablishment identified by the identifier of a cell for reestablishment.

A second aspect of the embodiments of the present invention discloses a user equipment. The user equipment may include a transceiving module, a processing module, and the like, and may be configured to perform the communication method disclosed in the first aspect.

A third aspect of the embodiments of the present invention discloses another user equipment. The user equipment may include a transceiver, a processor, and the like. The transceiver is corresponding to the transceiving module in the user equipment disclosed in the second aspect, and the processor is corresponding to the processing module in the user equipment disclosed in the second aspect. The user equipment may be configured to perform the communication method disclosed in the first aspect.

When a first user equipment fails to be connected to a first network device through a Uu interface and the first user equipment needs to establish a connection to a second network device, a fourth aspect of the embodiments of the present invention discloses another communication method, and the method may include the following:

A second user equipment may receive a first indication message broadcast by the first user equipment through a target interface. The first indication message is used to indicate that a connection failure occurs on the first user equipment, a destination node of the first indication message is the first network device, and the target interface is a communications interface, for example, a PC5 interface, between terminal devices. After receiving the first indication message, the second user equipment may forward the first indication message to the first network device, so that the first network device sends context information of the first user equipment to the second network device. The context information is used for establishing the connection between the second network device and the first user equipment.

A user equipment may forward, to a network device, an indication message of another nearby user equipment having a connection failure, so that the network device can push in advance context information of the another user equipment having the connection failure. Therefore, a communication delay between network devices and signaling overheads on an X2 interface can be reduced to some extent.

Optionally, after the second user equipment forwards the first indication message to the first network device, the method may further include the following:

The second user equipment may broadcast a second indication message through the target interface. The second indication message is used to indicate that the first indication message has been forwarded to the first network device.

In this way, the first network device may not receive the first indication message for a plurality of times, so that signaling overheads on a Uu interface between the user equipment and the network device can be reduced.

Optionally, the method may further include the following:

When the first indication message includes location information of the first user equipment, the second user equipment may determine a distance between the second user equipment and the first user equipment based on the location information.

When the first indication message further includes a frequency of a cell for reestablishment serving the first user equipment, and the distance is less than or equal to a preset distance, the second user equipment may perform signal measurement on a cell corresponding to the frequency, and report an obtained measurement result to the first network device, so that the first network device performs cell handover on the second user equipment based on the measurement result.

Alternatively, when the distance is less than or equal to the preset distance, the second user equipment may send, to the first network device, a third indication message that is used to indicate that the distance between the second user equipment and the first user equipment is less than or equal to the preset distance, so that the first network device sends context information of the second user equipment to a third network device.

In this way, the first network device can perform cell handover in advance on user equipment that may have a connection failure, thereby reducing connection failures.

A fifth aspect of the embodiments of the present invention discloses still another user equipment. The user equipment may include a transceiving module, a processing module, and the like, and may be configured to perform the communication method disclosed in the fourth aspect.

A sixth aspect of the embodiments of the present invention discloses still another user equipment. The user equipment may include a transceiver, a processor, and the like. The transceiver is corresponding to the transceiving module in the user equipment disclosed in the fifth aspect, and the processor is corresponding to the processing module in the user equipment disclosed in the fifth aspect. The user equipment may be configured to perform the communication method disclosed in the fourth aspect.

When a first user equipment fails to be connected to a first network device through a Uu interface and the first user equipment needs to establish a connection to a second network device, a seventh aspect of the embodiments of the present invention discloses still another communication method, and the method may include the following:

The first network device may receive a first indication message that is used to indicate that a connection failure occurs on the first user equipment; and send context information of the first user equipment to the second network device based on the first indication message. The context information is used for establishing the connection between the second network device and the first user equipment. In this way, after receiving the context information and a connection establishment request of the first user equipment, the second network device can quickly establish the connection to the first user equipment.

After receiving an indication message that is used to indicate that a connection failure occurs on user equipment, a network device (for example, a base station) can push context information of the user equipment to another network device in advance. In this way, the network device that is reconnected to the user equipment but does not have the context information of the user equipment does not need to obtain the context information from the network device in a reconnection process of the user equipment. Therefore, a communication delay between network devices and signaling overheads on an X2 interface can be reduced to some extent.

Optionally, before the first network device sends the context information of the first user equipment to the second network device based on the first indication message, the method may further include the following:

When the first indication message includes a measurement report of the first user equipment, the first network device may determine, based on the measurement report, a candidate cell for reestablishment of the first user equipment, and may determine, as the second network device, a network device serving the candidate cell for reestablishment; or when the first indication message includes an identifier of a cell for reestablishment of the first user equipment, the first network device may determine, as the second network device, a network device serving a cell for reestablishment identified by the identifier of a cell for reestablishment.

Optionally, the method may further include the following:

After receiving a third indication message that is used to indicate that a distance between the second user equipment and the first user equipment is less than or equal to a preset distance, the first network device may send context information of the second user equipment to a third network device based on the third indication message.

When a user equipment forwarding the first indication message is located near user equipment having a connection failure, the network device sends, in advance to a neighboring network device, context information of the user equipment forwarding the first indication message, so that user equipment connection failures can be reduced.

An eighth aspect of the embodiments of the present invention discloses a network device. The network device may include a transceiving module, a processing module, and the like, and may be configured to perform the communication method disclosed in the seventh aspect.

A ninth aspect of the embodiments of the present invention discloses another network device. The network device may include a transceiver, a processor, and the like. The transceiver is corresponding to the transceiving module in the network device disclosed in the eighth aspect, and the processor is corresponding to the processing module in the network device disclosed in the eighth aspect. The network device may be configured to perform the communication method disclosed in the seventh aspect.

When first user equipment establishes a connection to a first network device through a Uu interface, a tenth aspect of the embodiments of the present invention discloses still another communication method, and the method may include the following:

After receiving uplink timing information, a user equipment may obtain, from the uplink timing information, a target TA value corresponding to a target network parameter that matches a network parameter of the user equipment, and send data to a network device based on the target TA value. The uplink timing information may include a network parameter and a TA value corresponding to the network parameter.

A user equipment does not obtain uplink timing in a manner in which a network device sends the uplink timing to the user equipment. Instead, the user equipment uses uplink timing of nearby user equipment, or uplink timing proactively broadcast by the network device. In this way, efficiency of the user equipment in obtaining the uplink timing can be improved. Therefore, a communication delay between the user equipment and the network device and signaling overheads on a Uu interface are reduced.

Optionally, that the user equipment receives uplink timing information may include the following specific manners:

The user equipment receives, through a Uu interface, uplink timing information broadcast by the network device, or receives, through a target interface, uplink timing information broadcast by all user equipments in a target user equipment set.

The target interface is a communications interface, for example, a P5C interface, between terminal devices.

Optionally, that the user equipment obtains, from the uplink timing information, a target TA value corresponding to a target network parameter that matches a network parameter of the user equipment may include the following specific manners:

When the network parameter includes a signal quality range, and the signal quality range includes at least one of a signal to interference plus noise ratio (signal to interference plus noise ratio, SINR) range, a reference signal received power (reference signal received power, RSRP) range, and a reference signal received quality (reference signal received quality, RSRQ) range, the user equipment may determine, based on the signal quality range, a target signal quality range in which signal quality of the user equipment is located, to obtain a target TA value corresponding to the target signal quality range.

Alternatively, when the network parameter includes location information, the user equipment determines, from the location information, target location information corresponding to a target location that is a location corresponding to the location information and that is closest to a location of the user equipment, to obtain a target TA value corresponding to the target location information.

Optionally, that the user equipment receives, through a target interface, uplink timing information broadcast by all user equipments in a target user equipment set may include the following:

The user equipment receives, through the target interface, the uplink timing information broadcast at a specified power by all the user equipments in the target user equipment set.

In this case, that the user equipment obtains, from the uplink timing information, a target TA value corresponding to a target network parameter that matches a network parameter of the user equipment may include the following:

The user equipment obtains, from uplink timing information carried in a target signal, the target TA value corresponding to the target network parameter that matches the network parameter of the user equipment. The target signal is a signal with a highest power in a set of signals that carry uplink timing information and that are received by the user terminal.

In this way, the target TA value finally obtained by the user equipment is a TA value of user equipment closest to the user equipment. Therefore, accuracy of obtaining the TA value can be improved.

Optionally, after the user equipment sends the data to the network device based on the target TA value, the method may further include the following:

The user equipment may report the target TA value and the network parameter of the user equipment to the network device.

Each user equipment continually updates and reports a TA value and a network parameter of each user equipment. Therefore, accuracy of obtaining a TA value of another user equipment can be improved.

An eleventh aspect of the embodiments of the present invention discloses still another user equipment. The user equipment may include a transceiving module, a processing module, and the like, and may be configured to perform the communication method disclosed in the tenth aspect.

A twelfth aspect of the embodiments of the present invention discloses still another user equipment. The user equipment may include a transceiver, a processor, and the like. The transceiver is corresponding to the transceiving module in the user equipment disclosed in the eleventh aspect, and the processor is corresponding to the processing module in the user equipment disclosed in the eleventh aspect. The user equipment may be configured to perform the communication method disclosed in the tenth aspect.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may derive other drawings from these accompanying drawings without creative efforts.
FIG. 1 is a schematic diagram of a communications network architecture according to an embodiment of the present invention;
FIG. 2 is a schematic flowchart of a communication method according to an embodiment of the present invention;
FIG. 3 is a schematic flowchart of another communication method according to an embodiment of the present invention;
FIG. 4 is a schematic flowchart of still another communication method according to an embodiment of the present invention;
FIG. 5 is a schematic flowchart of still another communication method according to an embodiment of the present invention;
FIG. 6 is a schematic structural diagram of a user equipment according to an embodiment of the present invention;
FIG. 7 is a schematic structural diagram of another user equipment according to an embodiment of the present invention;
FIG. 8 is a schematic structural diagram of still another user equipment according to an embodiment of the present invention;
FIG. 9 is a schematic structural diagram of still another user equipment according to an embodiment of the present invention;
FIG. 10 is a schematic structural diagram of a network device according to an embodiment of the present invention;
FIG. 11 is a schematic structural diagram of another network device according to an embodiment of the present invention;
FIG. 12 is a schematic structural diagram of still another user equipment according to an embodiment of the present invention; and
FIG. 13 is a schematic structural diagram of still another user equipment according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

The embodiments of the present invention disclose a communication method and a related device. A communication delay in a connection re-establishment process and an uplink timing obtaining process can be reduced to some extent. The following provides detailed descriptions separately.

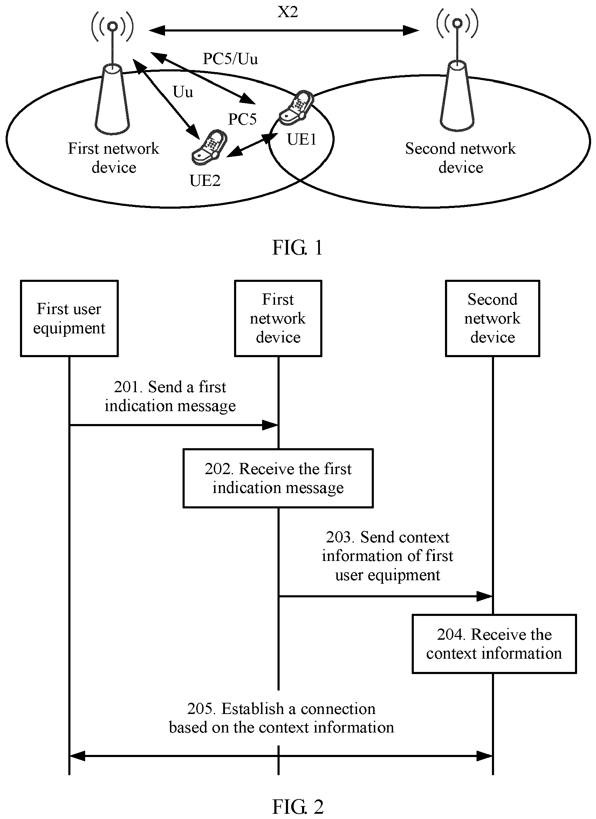

To better understand the communication method and the related device disclosed in the embodiments of the present invention, the following first describes a communications network architecture applicable to the embodiments of the present invention. Referring to FIG. 1, FIG. 1 is a schematic diagram of a communications network architecture according to an embodiment of the present invention. In the network architecture shown in FIG. 1, a first network device, a second network device, UE 1, and UE 2 are included. In this specification, a network device may include but is not limited to an evolved NodeB (evolved NodeB, eNB), a wireless network controller, and a base station controller. A UE may include but is not limited to a mobile phone, a tablet computer, a personal digital assistant (Personal Digital Assistant, PDA), a mobile Internet device (Mobile Internet Device, MID), a multimedia device, a streaming device, and a wearable device. An interface between network devices may include but is not limited to an X2 interface, and an interface between user equipment and a network device may include but is not limited to a Uu interface. When the network device is an eNB, the UE 1 is located on a network coverage edge of the first network device and the second network device, and the UE 2 establishes a connection to the first network device and is located near the UE 1. Communication between the first network device and the second network device is performed through an X2 interface, communication between the UE 2 and the first network device is performed through a Uu interface, and communication between the UE 1 and the UE 2 is performed through a PC5 interface. The PC5 interface is a communications interface that supports direct communication between terminal devices. Further, the UE 1 may establish a connection to the first network device through the PC5 interface or the Uu interface. For example, after establishing the connection to the first network device, the UE 1 may perform data transmission with the first network device through the Uu interface. When the UE 1 is disconnected from the first network device and needs to re-establish a connection to the second network device, the UE 1 may send an indication message to the first network device through the PC5 interface. When the network architecture shown in FIG. 1 is implemented, if a system network is congested, the UE 1 can send a signal to nearby UE or a network device through the PC5 interface, to reduce a communication delay.

Based on the network architecture shown in FIG. 1, when UE 1 fails to establish a connection to a first network device through a Uu interface and needs to reconnect a second network device, an embodiment of the present invention discloses a communication method. Referring to FIG. 2, FIG. 2 is a schematic flowchart of a communication method according to an embodiment of the present invention. As shown in FIG. 2, the communication method may include the following steps.

201. A first user equipment sends a first indication message to a first network device.

In this embodiment of the present invention, when a connection failure occurs on the first user equipment, the first user equipment generates the first indication message to indicate that the connection failure occurs on the first user equipment, and sends the first indication message to the first network device. The first network device may also be referred to as a source network device and is a network device connected to the first user equipment before the connection failure occurs on the first user equipment. That a connection failure occurs on the first user equipment may be understood as a disconnection of the first user equipment and the first network device. Specifically, an RLF, a HOF, or out of N downlink frames occurs on the first user equipment. The first indication message may include a specific reason why the connection failure occurs on the first user equipment.

It should be noted that the first user equipment may be a user equipment that has relatively poor signal quality or service quality in a current network. For example, the UE may be located on a coverage edge of a network device or blocked by a building. In this way, the first user equipment is easily connected to a second network device in a connection re-establishment process after the connection failure. A cell corresponding to the second network device may be horizontally adjacent to a cell corresponding to the first network device, or may overlap with a cell corresponding to the first network device. If the second network device does not have context information of the first user equipment, the first user equipment may indicate, by using the first indication message, that the connection failure occurs on the first user equipment, so that the first network device proactively sends the context information of the first user equipment to the second network device.

Specifically, the first user equipment may forward the first indication message to the first network device by using a nearby user equipment, or may directly send the first indication message to the first network device. This is not limited in this embodiment of the present invention.

Further, even if the first user equipment and the first network device are disconnected, a D2D connection may be established through a communications interface between terminal devices. In this case, a manner in which the first user equipment directly sends the first indication message to the first network device may be understood as follows: The first user equipment sends the first indication message to the first network device through a target interface. The target interface is a communications interface, for example, a PC5 interface, between terminal devices.

Optionally, after the connection failure, the first user equipment generates the first indication message. The first indication message may further instruct the first network device to send the context information of the first user equipment to the second network device. In this case, after receiving the first indication message, the first network device sends the context information of the first user equipment to the second network device.

Optionally, the first user equipment may proactively perform signal measurement on a neighboring cell after the connection failure, and send a measurement report and the first indication message to the first network device; or the first user equipment performs signal measurement on a neighboring cell based on measurement configuration, and after the connection failure, sends a measurement report and the first indication message to the first network device.

Optionally, the first user equipment may proactively perform signal measurement on a neighboring cell after the connection failure, determine a cell for reestablishment, and then send an identifier of the cell for reestablishment and the first indication message to the first network device; or the first user equipment performs signal measurement on a neighboring cell based on measurement configuration, to determine a cell for reestablishment, and then after the connection failure, sends an identifier of the cell for reestablishment and the first indication message to the first network device.

202. The first network device receives the first indication message.

203. The first network device sends context information of the first user equipment to a second network device based on the first indication message.

In this embodiment of the present invention, because the first indication message indicates that the connection failure occurs on the first user equipment, after receiving the first indication message, the first network device may send the context information of the first user equipment to the second network device. The context information is used for establishing a connection between the first user equipment and the second network device. The context information includes a source cell identifier of the first user equipment, an identifier of a target cell to which a connection is re-established, a key used for reconnecting to the target cell, information related to data transmission on the first user equipment before the connection failure, and the like. This is not limited in this embodiment of the present invention.

It should be noted that the second network device may be determined in the following manners: When the first indication message includes an identifier of a cell for reestablishment , the first network device determines, as the second network device, a network device serving a cell for reestablishment identified by the identifier of a cell for reestablishment. The cell for reestablishment is one or more cells with relatively high signal strength that are determined by the first user equipment based on a measurement report obtained in signal measurement. Alternatively, when the first indication message includes a measurement report of the first user equipment, the first network device determines, based on the measurement report, cells to which the first user equipment may be reconnected (in other words, the first network device determines, based on the measurement report, one or more cells with relatively high signal strength), and determines, as the second network device, a network device serving the cells. It can be learned that the second network device may be one neighboring network device of the first network device, or may be a plurality of neighboring network devices. This is not limited in this embodiment of the present invention.

204. The second network device receives the context information.

205. The second network device establishes a connection to the first user equipment based on the context information.

In this embodiment of the present invention, after receiving the context information sent by the first network device, the second network device may establish the connection to the first user equipment when the second network device receives a connection request sent by the first user equipment and can establish the connection to the first user equipment.

It can be learned that, according to the method described in FIG. 2, after the connection failure, the first user equipment may send the first indication message to the first network device through the communications interface (the target interface) between the terminal devices, so that the first network device proactively sends the context information of the first user equipment to the second network device serving a cell to which the first user equipment may be reconnected. In this way, when a connection failure occurs, the user equipment may instruct a source network device to push context information of the user equipment in advance, so that a network device serving the cell for reestablishment does not need to obtain the context information by sending a request for obtaining context information to the source network device during connection re-establishment. Therefore, a communication delay between network devices and signaling overheads on an X2 interface can be reduced to some extent.

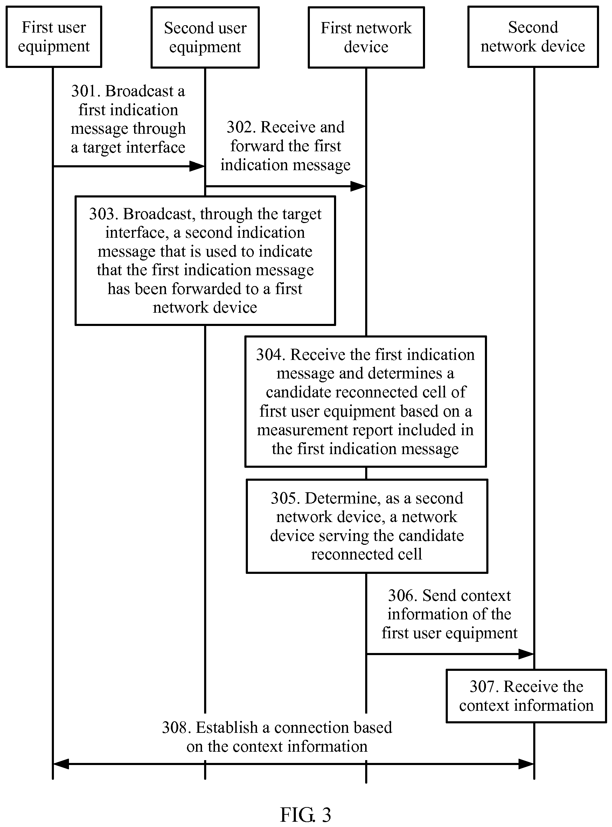

Based on the network architecture shown in FIG. 1, when UE 1 fails to establish a connection to a first network device through a Uu interface and needs to reconnect a second network device, an embodiment of the present invention discloses another communication method. Referring to FIG. 3, FIG. 3 is a schematic flowchart of another communication method according to an embodiment of the present invention. As shown in FIG. 3, the communication method may include the following steps.

301. First user equipment broadcasts a first indication message through a target interface.

In this embodiment of the present invention, the first user equipment may establish in advance a D2D connection to one or more nearby user equipments through the target interface. In this way, after a connection failure (an RLF, a HOF, or out of downlink frames occurs), the first user equipment may generate the first indication message and broadcast, through the target interface, the first indication message to nearby user equipment. The first indication message is used to indicate that the connection failure occurs on the first user equipment.

302. A second user equipment receives the first indication message and forwards the first indication message to a first network device.

In this embodiment of the present invention, a destination node of the first indication message is the first network device, to be specific, a network device connected to the first user equipment before the connection failure. Specifically, the first indication message includes a source cell identifier of the first user equipment, or the first indication message includes identification information of a network device serving a source cell of the first user equipment. After the first user equipment broadcasts the first indication message through the target interface, another user equipment located near to the first user equipment may receive the first indication message. After receiving the first indication message, the another user equipment (the second user equipment) may determine the first network device by using the foregoing information, and forward the first indication message to the first network device.

Specifically, after receiving the first indication message, the second user equipment may first determine whether the second user equipment has been connected to the first network device, and specifically, whether the second user equipment has established an RRC connection to the first network device. The second user equipment can forward the first indication message to the first network device only if the second user equipment is connected to the first network device. The second user equipment is a user equipment in the source cell serving the first user equipment.

Optionally, the second user equipment may be a user equipment connected to the first user equipment in advance. To be specific, when detecting that the first user equipment is located on a coverage edge of the first network device or detecting a cell covered by another network device, the first user equipment searches for the second user equipment in advance, and establishes a connection through the target interface.

303. The second user equipment broadcasts, through the target interface, a second indication message that is used to indicate that the first indication message has been forwarded to the first network device.

In this embodiment of the present invention, after forwarding the first indication message to the first network device, the second user equipment may broadcast the second indication message through the target interface. The second indication message is used to indicate that the first indication message has been forwarded to the first network device. In this way, another user equipment receiving the first indication message does not forward the first indication message to the first network device. In this way, the first network device may not receive the first indication message for a plurality of times, so that signaling overheads on a Uu interface between the user equipment and the network device can be reduced.

304. The first network device receives the first indication message and determines a candidate cell for reestablishment of the first user equipment based on a measurement report included in the first indication message.

In this embodiment of the present invention, the first indication message may include the measurement report of the first user equipment, the measurement report includes a measurement report of a source cell of the first user equipment and measurement reports of neighboring cells, and a measurement object in the measurement report may be at least one of an RSRP, RSRQ, and an SINR. In this way, after receiving the first indication message forwarded by the second user equipment, the first network device may determine, based on the measurement report, the candidate cell for reestablishment of the first user equipment, in other words, one or more cells with relatively high signal strength in the measurement report.

305. The first network device determines, as a second network device, a network device serving the candidate cell for reestablishment.

306. The first network device sends context information of the first user equipment to the second network device based on the first indication message.

In this embodiment of the present invention, after determining the candidate cell for reestablishment of the first user equipment based on the first indication message, the first network device determines, as the second network device, a network device serving the candidate cell for reestablishment, to send the context information of the first user equipment to the second network device.

Optionally, the first indication message may include an identifier of a cell for reestablishment , and the first network device may further determine, as the second network device, a network device serving a cell for reestablishment identified by the identifier of a cell for reestablishment. The cell for reestablishment is one or more cells with relatively high signal strength that are determined by the first user equipment based on a measurement report obtained in signal measurement.

307. The second network device receives the context information.

308. The second network device establishes a connection to the first user equipment based on the context information.

It can be learned that, according to the method described in FIG. 3, after a connection failure, the first user equipment may broadcast the first indication message to a nearby user equipment through a communications interface (the target interface) between terminal devices. The destination node of the first indication message is the first network device. After receiving the first indication message, the second user equipment connected to the first network device forwards the first indication message to the first network device. Then, after receiving the first indication message, the first network device determines the candidate cell for reestablishment of the first user equipment and proactively sends the context information of the first user equipment to the second network device serving the candidate cell for reestablishment. Because a network device senses a user equipment connection failure more slowly than a user equipment, the user equipment can quickly notify a source network device in this way, so that the source network device proactively pushes context information of the user equipment to a network device serving a possible cell for reestablishment, and the network device serving the cell for reestablishment does not need to obtain the context information by sending a request for obtaining context information to the source network device when the user equipment re-establishes a connection. Therefore, a communication delay between network devices and signaling overheads on an X2 interface can be reduced to some extent.

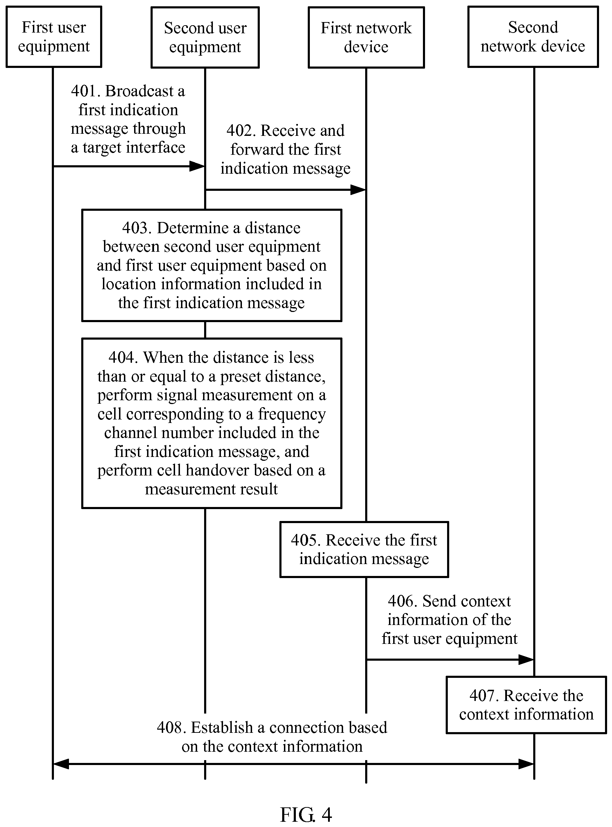

Based on the network architecture shown in FIG. 1, when UE 1 fails to establish a connection to a first network device through a Uu interface and needs to reconnect a second network device, an embodiment of the present invention discloses still another communication method. Referring to FIG. 4, FIG. 4 is a schematic flowchart of still another communication method according to an embodiment of the present invention. As shown in FIG. 4, the communication method may include the following steps.

401. A first user equipment broadcasts a first indication message through a target interface.

In this embodiment of the present invention, the first user equipment may broadcast, after a connection failure, the first indication message through the target interface, and the first indication message is used to indicate that the connection failure occurs on the first user equipment. Alternatively, the first user equipment may broadcast, when preparing for cell handover, the first indication message through the target interface, and the first indication message is used to indicate that the first user equipment is preparing for cell handover. Alternatively, the first user equipment may broadcast, after cell handover is complete, the first indication message through the target interface, and the first indication message is used to indicate that cell handover has been performed on the first user equipment. This is not limited in this embodiment of the present invention.

In a feasible implementation, the first user equipment may broadcast the first indication message at a specified power through the target interface, so that the first indication message is received by a user equipment within a preset distance range.

In specific implementation, the first user equipment broadcasts the first indication message at the specified power, so that the first indication message can be received by another user equipment within a specific distance range.

Further, broadcasting at the specified power may enable another user equipment within a relatively small distance range to receive the first indication message. This can indicate, to the another user equipment that can receive the first indication message, that a connection failure may occur, so that the another user equipment can perform cell handover in advance.

402. A second user equipment receives the first indication message and forwards the first indication message to a first network device.

403. The second user equipment determines a distance between the second user equipment and the first user equipment based on location information included in the first indication message.

In this embodiment of the present invention, the first indication message may include location information of the first user equipment, so that after receiving the first indication message, the second user equipment can determine a distance between the second user equipment and the first user equipment based on the location information, and determine whether the distance is less than or equal to a preset distance, in other words, determine whether the first user equipment is near to the second user equipment.

404. When the distance is less than or equal to a preset distance, the second user equipment performs signal measurement on a cell corresponding to a frequency included in the first indication message, and reports a measurement result to the first network device.

In this embodiment of the present invention, when the first indication message includes an identifier of a cell for reestablishment of the first user equipment, the first indication message may further include information about a frequency (for example, system bandwidth and carrier frequency) corresponding to a cell for reestablishment. In this way, when determining that the distance between the second user equipment and the first user equipment is less than or equal to the preset distance, the second user equipment may perform signal measurement on cells corresponding to the frequency indicated in the frequency information, to obtain signal measurement results of the cells, and report the measurement results to the first network device. The first network device performs cell handover on the second user equipment based on the measurement results.

It should be noted that after receiving the first indication message and determining that the distance between the second user equipment and the first user equipment is less than or equal to the preset distance, the second user equipment may proactively perform signal measurement on the cell corresponding to the frequency included in the first indication message, and perform cell handover in advance based on the measurement result. Alternatively, the second user equipment may send a measurement configuration request to the first network device, and the first network device configures, based on the frequency included in the first indication message, the second user equipment to perform signal measurement on the cell corresponding to the frequency, and perform cell handover on the second user equipment in advance based on the measurement result. This is not limited in this embodiment of the present invention.

In a feasible implementation, when the distance is less than or equal to the preset distance, the following steps may be further performed:
(11) The second user equipment sends a third indication message to the first network device.
(12). The first network device sends context information of the second user equipment to a third network device based on the third indication message.

In a specific implementation, the second user equipment may send the third indication message to the first network device when determining that the distance between the second user equipment and the first user equipment is less than or equal to the preset distance. The third indication message is used to indicate that the distance between the second user equipment and the first user equipment is less than or equal to the preset distance, in other words, the second user equipment is near to the first user equipment. Then, after receiving the third indication message, the first network device may send the context information of the second user equipment to the third network device before a connection failure occurs on the second user equipment. The third network device and the first network device may be different network devices. The third network device may be a second network device, or may be different from a second network device. This is not limited in this embodiment of the present invention.

It should be noted that the second user equipment may perform signal measurement on a neighboring cell in advance after determining that the distance between the second user equipment and the first user equipment is less than or equal to the preset distance, and then send the measurement report and the third indication message to the first network device. The first network device determines, based on the measurement report of the second user equipment, one or more cells with relatively high signal strength, to send the context information of the second user equipment to the third network device serving the cell, and hand over the second user equipment to the cell in advance.

In this way, the first network device can perform cell handover in advance on user equipment that may have a connection failure, thereby reducing connection failures.

In another feasible implementation, when the distance is less than or equal to the preset distance, the second user equipment may further search for relay user equipment in advance, and establish a D2D connection to the relay user equipment through the target interface. To be specific, after a connection failure, the second user equipment needs to forward a connection failure indication message by using the relay user equipment; or when a connection failure occurs and a connectable network is not found, the second user equipment performs data transmission with a network device by using the relay user equipment.

405. The first network device receives the first indication message.

406. The first network device sends context information of the first user equipment to a second network device.

407. The second network device receives the context information of the first user equipment.

408. The second network device establishes a connection to the first user equipment based on the context information.

It should be noted that steps 403 and steps 404 may be performed concurrently with any one of steps 405 to 408. This is not limited in this embodiment of the present invention.

In another feasible implementation, alternatively, after receiving the first indication message, the second user equipment may perform measurement based on a measurement configuration configured on a network device connected to the second user equipment, or perform signal measurement on the cell corresponding to the frequency included in the first indication information.

In this embodiment of the present invention, after receiving the first indication message, the second user equipment may not forward the first indication message to the first network device, but perform measurement based on a measurement configuration configured on a network device connected to the second user equipment, or perform signal measurement on the cell corresponding to the frequency included in the first indication information. In this way, the second user equipment may be triggered to perform pre-handover measurement, and report a measurement result when the measurement result meets a reporting condition, so that a network device connected to the second user equipment can hand over the second user equipment to another cell in a timely manner, thereby reducing connection failures.

Alternatively, after receiving the first indication message, the second user equipment performs measurement based on a measurement configuration configured on a network device connected to the second user equipment, or performs signal measurement on the cell corresponding to the frequency included in the first indication information, and reports a measurement result to the network device connected to the second user equipment, so that the network device connected to the second user equipment can hand over the second user equipment to another cell in a timely manner, thereby reducing connection failures.

Alternatively, when the distance is less than or equal to the preset distance, the second user equipment performs measurement based on a measurement configuration configured on a network device connected to the second user equipment, or performs signal measurement on the cell corresponding to the frequency included in the first indication information, and reports a measurement result to the network device connected to the second user equipment, so that the network device connected to the second user equipment can hand over the second user equipment to another cell in a timely manner, thereby reducing connection failures.

It can be learned that, according to the method described in FIG. 4, after receiving the first indication message of the first user equipment and determining that the distance between the second user equipment and the first user equipment is less than or equal to the preset distance, the second user equipment may perform signal measurement on the cell corresponding to the frequency included in the first indication message, and report the measurement result to the first network device, so that the first network device performs cell handover on the second user equipment based on the measurement result. According to this embodiment of the present invention, a user equipment can obtain a connection failure indication message of a nearby user equipment, and prepare with a connected user device for cell measurement configuration or handover. Therefore, RLFs, HOFs, or out of downlink frames can be reduced.

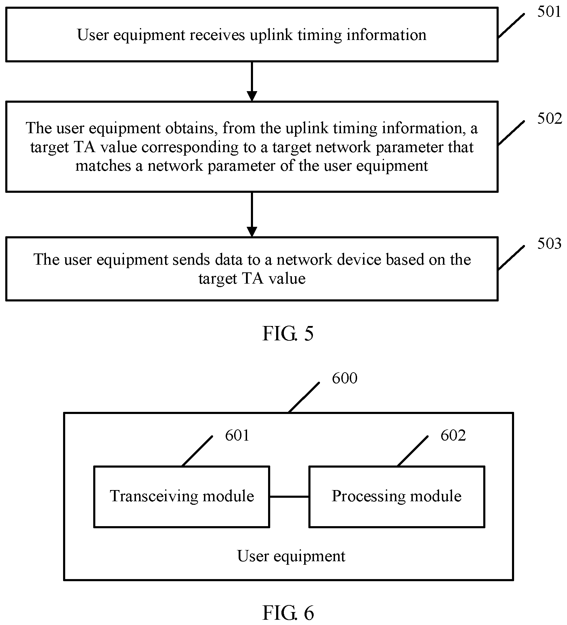

Based on the network architecture shown in FIG. 1, after UE 1 establishes a connection to a first network device through a Uu interface, an embodiment of the present invention discloses still another communication method. Referring to FIG. 5, FIG. 5 is a schematic flowchart of still another communication method according to an embodiment of the present invention. As shown in FIG. 5, the communication method may include the following steps.

501. A user equipment receives uplink timing information.

In this embodiment of the present invention, the user equipment may be user equipment that prepares to reconnect to a network device in the foregoing manners, or may be user equipment that prepares to reconnect to a network device in another manner when a connection failure occurs, or may be a user equipment that is initially connected to a network device, or may be a user equipment that needs to send data, or may be a user equipment that needs cell handover. This is not limited in this embodiment of the present invention.

In this embodiment of the present invention, the uplink timing information includes a network parameter and a TA value corresponding to the network parameter. It should be noted that the TA value is a time that the user equipment needs to advance when sending uplink data, to ensure that the network device can accurately receive the data sent by the user equipment.

A plurality of network parameters may be included. The network parameter and the TA value may be in a one-to-one correspondence, or a plurality of network parameters may be corresponding to one TA value. This is not limited in this embodiment of the present invention.

In a feasible implementation, that the user equipment receives uplink timing information may be specifically as follows:

The user equipment receives, through a Uu interface, uplink timing information broadcast by the network device.

In a specific implementation, the network device may be a network device to which the user equipment prepares to connect, and the network device may receive, in each cell, uplink timing information reported by a user equipment served by the cell, and periodically update and broadcast the uplink timing information to a user equipment within coverage of the network device, or may configure, for each cell, TA values corresponding to different network parameters. In this way, when the user equipment is initially connected to the network device, or needs to send data, or is in a moving state, the user equipment can periodically receive uplink timing information, to be specific, each network parameter and a TA value corresponding to the network parameter, broadcast by the network device for a local cell.

In another feasible implementation, that the user equipment receives uplink timing information may be specifically as follows:

The user equipment receives, through a target interface, uplink timing information broadcast by all user equipments in a target user equipment set.

In a specific implementation, the target interface is an interface between terminal devices. Each user equipment may broadcast uplink timing information of the user equipment in real time through the target interface. In this way, when the user equipment is initially connected to the network device, or needs cell handover, or is in moving state, the user equipment may monitor uplink timing information broadcast by a nearby user equipment.

It should be noted that the target user equipment set is a collective name for all user equipments corresponding to uplink timing information that can be received by the user equipment through the target interface. Therefore, there may be one or more user equipments included in the target user equipment set. This is not limited in this embodiment of the present invention.

Further, the user equipment may monitor, each time the user equipment wakes up from a discontinuous reception (Discontinuous Reception, DRX) period, uplink timing information broadcast by a nearby user equipment, or may monitor, at a dedicated monitor period, uplink timing information broadcast by a nearby user equipment. This is not limited in this embodiment of the present invention.

Further, if the user equipment needs cell handover, uplink timing information broadcast by all user equipments in a target cell serving the user equipment set can be received.

In other words, each user equipment may broadcast its uplink timing information to a nearby user equipment through the target interface, or after receiving uplink timing information reported by a user equipment in each cell, the network device may broadcast the uplink timing information of the user equipments in the cell together.

502. The user equipment obtains, from the uplink timing information, a target TA value corresponding to a target network parameter that matches a network parameter of the user equipment.

In this embodiment of the present invention, after receiving the uplink timing information, the user equipment may determine the network parameter of the user equipment, and search the uplink timing information for the target network parameter that matches the network parameter, to determine, as the TA value used for the user equipment to send data, the target TA value corresponding to the target network parameter.

Further, that the network parameter of the user equipment matches the target network parameter may be understood as follows: The network parameter is located within a target network parameter range, or the network parameter is the same as the target network parameter, or a difference between the network parameter and the target network parameter is within a specified range, or the like. This is not limited in this embodiment of the present invention.

In a feasible implementation, that the user equipment obtains, from the uplink timing information, a target TA value corresponding to a target network parameter that matches a network parameter of the user equipment may specifically include the following steps:
(21) When the network parameter includes a signal quality range, the user equipment determines, based on the signal quality range, a target signal quality range in which signal quality of the user equipment is located.
(22) The user equipment obtains a target TA value corresponding to the target signal quality range.

In a specific implementation, the signal quality range includes at least one of an SINR range, an RSRP range, and an RSRQ range. When the user equipment receives the uplink timing information broadcast by the network device, the uplink timing information may include a plurality of SINR ranges and a TA value corresponding to each range, or may include a plurality of RSRP ranges and a TA value corresponding to each range, or may include a plurality of RSRQ ranges and a TA value corresponding to each range. The uplink timing information is shown in FIG. 1. This is not limited in this embodiment of the present invention.

**Table 1 Uplink timing information**

| **TA value** | **Signal quality (SINR/RSRP/RSRQ)** | **Signal quality offset** |
|---|---|---|
| TA1 | SINR1/RSRP1/RSRQ1 | ±M1 |
| TA2 | SINR2/RSRP2/RSRQ2 | ±M2 |
| ... | ... | ... |

In this way, the user equipment may determine the target signal quality range in which signal quality of the user equipment is located, to obtain the target TA value corresponding to the target signal quality range.

Optionally, when the user equipment receives uplink timing information broadcast by a nearby user equipment, the uplink timing information may include a correspondence between an SINR range and a TA value, a correspondence between an RSRP range and a TA value, or a correspondence between an RSRQ range and a TA value. The target TA value is a TA value corresponding to an RSRP that is of nearby user equipment and that is closest to the SINR of the user equipment, or a TA value corresponding to an RSRP that is of a nearby user equipment and that is closest to the RSRP of the user equipment, or a TA value corresponding to RSRQ that is of nearby user equipment and that is closest to the RSRQ of the user equipment.

In another feasible implementation, that the user equipment obtains, from the uplink timing information, a target TA value corresponding to a target network parameter that matches a network parameter of the user equipment specifically includes the following steps:
(31). When the network parameter includes location information, the user equipment determines, from the location information, target location information corresponding to a target location that is a location corresponding to the location information and that is closest to a location of the user equipment.
(32) The user equipment obtains a target TA value corresponding to the target location information.

In a specific implementation, each user equipment may broadcast, to a nearby user equipment, uplink timing information that includes location information and a TA value of the user equipment. In this way, after receiving uplink timing information, the user equipment may determine, based on location information included in the uplink timing information, a distance between the user equipment and a user equipment to which the uplink timing information belongs, to select uplink timing information broadcast by a user equipment that is closest to the user equipment, and determine a TA value in the uplink timing information as the target TA value used for the user equipment to send data.

Further, after each user reports the location information and the TA value of the user equipment to the network device, the network device may broadcast, to each user equipment in each cell, uplink timing information that includes each location information and a TA value corresponding to the location information in the cell. In this way, after receiving the uplink timing information broadcast by the network device, the user equipment may determine a distance between a location corresponding to each location information and a location of the user equipment, to obtain a TA value corresponding to target location information of a location closet to the user equipment, and use the TA value as the target TA value for the user equipment to send data.

In still another feasible implementation, that the user equipment receives, through a target interface, uplink timing information broadcast by all user equipments in a target user equipment set may be specifically as follows:

The user equipment receives, through the target interface, the uplink timing information broadcast at a specified power by all the user equipments in the target user equipment set.

In this case, that the user equipment obtains, from the uplink timing information, a target TA value corresponding to a target network parameter that matches a network parameter of the user equipment may be specifically as follows:

The user equipment obtains, from uplink timing information carried in a target signal, the target TA value corresponding to the target network parameter that matches the network parameter of the user equipment. The target signal is a signal with a highest power in a set of signals that carry uplink timing information and that are received by the user terminal.

In a specific implementation, each user equipment may broadcast uplink timing information of the user equipment at a specified power. The specified power may be a relatively small transmit power. In this way, the uplink timing information can be received only by a nearby user equipment. In other words, all uplink timing information received by the user equipment is broadcast by a nearby user equipment. Therefore, a TA value used by the nearby user equipment is quite close to the TA value of the user equipment, and the uplink timing information can be obtained accurately.

Further, because a same power is used by each user equipment to broadcast uplink timing information, after receiving the uplink timing information broadcast by each user equipment, the user equipment may determine one or more pieces of uplink timing information that has a highest received power, to obtain, from the uplink timing information, the target TA value corresponding to the target network parameter that matches the network parameter of the user equipment.

In this way, the target TA value finally obtained by the user equipment is a TA value of user equipment closest to the user equipment. Therefore, accuracy of obtaining the TA value can be improved.

In still another feasible implementation, each TA value has a validity time. The validity time may be configured by the network device, or may be configured by another user equipment when the another user equipment broadcasts uplink timing information, or may be configured by the user equipment. This is not limited in this embodiment of the present invention.

Therefore, after the user equipment obtains the target TA value in the foregoing manners, the target TA value is valid within a validity time, and when the validity time elapses, the user equipment needs to obtain a TA value again. In this way, it can be ensured that the network device can accurately receive the data sent by the user equipment.

503. The user equipment sends data to a network device based on the target TA value.

In an optional step, after obtaining the target TA value, the user equipment may further send the data to the network device based on the target TA value, to be specific, advance a time of the target TA to send the data to the network device, so that the network device is synchronized when receiving the uplink data.

In still another feasible implementation, if the user equipment receives the uplink timing information broadcast by the network device, after sending the data to the network device based on the target TA value, the user equipment may report the target TA value and the network parameter (including the location information, the RSRP, the RSRQ, or the like) of the user equipment to the network device. Specifically, the target TA value and the network parameter of the user equipment may be reported through a Uu interface.

It can be learned that, according to the method described in FIG. 5, when the user equipment is initially connected to the network device, or is in a moving state, or needs cell handover, the user equipment may obtain the uplink timing information broadcast by the network device or a nearby user equipment, to select, based on the uplink timing information, the target TA value corresponding to the target network parameter that matches the network parameter of the user equipment, and send the data to the network device based on the target TA value, so that the network device is synchronized when receiving the uplink data. According to this embodiment of the present invention, the user equipment does not obtain the uplink timing in a manner in which the network device sends the uplink timing information to the user equipment. Instead, the user equipment uses the uplink timing of the nearby user equipment, or the uplink timing broadcast by the network device. In this way, efficiency of the user equipment in obtaining the uplink timing can be improved. Therefore, a communication delay between the user equipment and the network device and signaling overheads on a Uu interface are reduced.

Based on the network architecture shown in FIG. 1, when UE 1 fails to establish a connection to a first network device through a Uu interface and needs to reconnect a second network device, an embodiment of the present invention discloses a user equipment, namely, a first user equipment. Referring to FIG. 6, FIG. 6 is a schematic structural diagram of a user equipment according to an embodiment of the present invention. As shown in FIG. 6, the user equipment 600 may include a transceiving module 601 and a processing module 602.

The transceiving module 601 is configured to send a first indication message to a first network device, so that the first network device sends context information of the user equipment 600 to a second network device. The first indication message is used to indicate that a connection failure occurs on the user equipment 600, and the context information is used for establishing a connection between the second network device and the user equipment 600.

The processing module 602 is configured to establish a connection to the second network device.

The connection failure may be understood as a disconnection of the user equipment 600 and the first network device. Specifically, an RLF, a HOF, or out of N downlink frames occurs on the user equipment 600. The first indication message may include a specific reason why the connection failure occurs on the user equipment 600.

In a feasible implementation, that the transceiving module 601 sends a first indication message to a first network device may be specifically as follows:
sending the first indication message to the first network device through a target interface; or
broadcasting the first indication message through a target interface, to instruct a second user equipment to forward the first indication message to the first network device, where a destination node of the first indication message is the first network device, and the second user equipment is a user equipment connected to the first network device.

The target interface is a communications interface, for example, a PC5 interface, between terminal devices.

In another feasible implementation, that the transceiving module 601 broadcasts the first indication message through a target interface may be specifically as follows:
broadcasting the first indication message at a specified power through the target interface, so that the first indication message is received by a user equipment within a preset distance range.

Broadcasting at the specified power may enable another user equipment within a relatively small distance range to receive the first indication message. This can indicate, to the another user equipment that can receive the first indication message, that a connection failure may occur, so that the another user equipment can perform cell handover in advance.

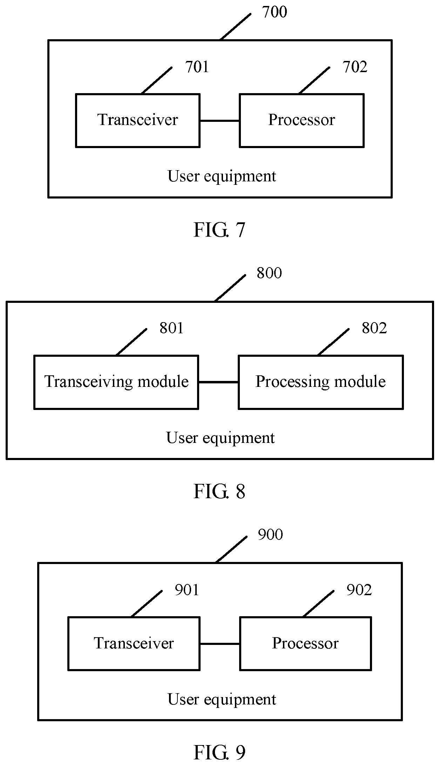

Referring to FIG. 7, FIG. 7 is a schematic structural diagram of another user equipment according to an embodiment of the present invention. As shown in FIG. 7, the user equipment 700 may include a transceiver 701 and a processor 702.

The transceiver 701 may be configured to send a first indication message to a first network device, so that the first network device sends context information of the user equipment 700 to a second network device. The first indication message is used to indicate that a connection failure occurs on the user equipment 700, and the context information is used for establishing a connection between the second network device and the user equipment 700.

The processor 702 may be configured to establish a connection to the second network device.

In a feasible implementation, that the transceiver 701 sends a first indication message to a first network device may be specifically as follows:
sending the first indication message to the first network device through a target interface; or
broadcasting the first indication message through a target interface, to instruct a second user equipment to forward the first indication message to the first network device, where a destination node of the first indication message is the first network device, and the second user equipment is a user equipment connected to the first network device.

The target interface is a communications interface, for example, a PC5 interface, between terminal devices.

In another feasible implementation, that the transceiver 701 broadcasts the first indication message through a target interface may be specifically as follows:
broadcasting the first indication message at a specified power through the target interface, so that the first indication message is received by a user equipment within a preset distance range.

Broadcasting at the specified power may enable another user equipment within a relatively small distance range to receive the first indication message. This can indicate, to the another user equipment that can receive the first indication message, that a connection failure may occur, so that the another user equipment can perform cell handover in advance.

It can be learned that, according to the user equipment described in FIG. 6 or FIG. 7, after a connection failure, the user equipment may send the first indication message to the first network device through the communications interface (the target interface) between the terminal devices, so that the first network device proactively sends the context information of the user equipment to the second network device serving a cell to which the user equipment may be reconnected. In this way, when a connection failure occurs, the user equipment may instruct a source network device to push context information of the user equipment in advance, so that a network device serving the cell for reestablishment does not need to obtain the context information by sending a request for obtaining context information to the source network device during connection re-establishment. Therefore, a communication delay between network devices and signaling overheads on an X2 interface can be reduced to some extent.

Based on the network architecture shown in FIG. 1, when UE 1 fails to establish a connection to a first network device through a Uu interface and needs to reconnect a second network device, an embodiment of the present invention discloses another user equipment, namely, a second user equipment. Referring to FIG. 8, FIG. 8 is a schematic structural diagram of still another user equipment according to an embodiment of the present invention. As shown in FIG. 8, the user equipment 800 may include a transceiving module 801.

The transceiving module 801 may be configured to receive a first indication message broadcast by first user equipment through a target interface. The first indication message is used to indicate that a connection failure occurs on the first user equipment, a destination node of the first indication message is a first network device, and the target interface is a communications interface, for example, a PC5 interface, between terminal devices.

The transceiving module 801 may be further configured to forward the first indication message to the first network device, so that the first network device sends context information of the first user equipment to a second network device. The context information is used for establishing a connection between the second network device and the first user equipment. Then, the second network device establishes the connection to the first user equipment based on the context information.

In a feasible implementation, the transceiving module 801 may be further configured to broadcast, after forwarding the first indication message to the first network device, a second indication message through the target interface. The second indication message is used to indicate that the first indication message has been forwarded to the first network device.

In this way, the first network device may not receive the first indication message for a plurality of times, so that signaling overheads on a Uu interface between the user equipment and the network device can be reduced.

In another feasible implementation, the user equipment 800 may further include a processing module 802.

The processing module 802 may be configured to: when the first indication message includes location information of the first user equipment, determine a distance between the user equipment 800 and the first user equipment based on the location information.

The processing module 802 may be further configured to: when the first indication message further includes a frequency of a cell for reestablishment serving the first user equipment, and the distance is less than or equal to a preset distance, perform signal measurement on a cell corresponding to the frequency, and report a measurement result to the first network device, so that the first network device performs cell handover on the user equipment 800 based on the measurement result.

The transceiving module 801 may be further configured to: when the distance is less than or equal to a preset distance, send, to the first network device, a third indication message that is used to indicate that the distance between the user equipment 800 and the first user equipment is less than or equal to the preset distance, so that the first network device sends context information of the user equipment 800 to a third network device.

The third network device and the second network device may be a same network device or may be different network devices. This is not limited in this embodiment of the present invention.

In this way, the first network device can perform cell handover in advance on a user equipment that may have a connection failure, thereby reducing connection failures.

Referring to FIG. 9, FIG. 9 is a schematic structural diagram of still another user equipment according to an embodiment of the present invention. As shown in FIG. 9, the user equipment 900 may include a transceiver 901 and a processor 902.

The transceiver 901 may be configured to receive a first indication message broadcast by first user equipment through a target interface. The first indication message is used to indicate that a connection failure occurs on the first user equipment, a destination node of the first indication message is a first network device, and the target interface is a communications interface, for example, a PC5 interface, between terminal devices.

The transceiver 901 may be further configured to forward the first indication message to the first network device, so that the first network device sends context information of the first user equipment to a second network device. The context information is used for establishing a connection between the second network device and the first user equipment. Then, the second network device establishes the connection to the first user equipment based on the context information.

In a feasible implementation, the transceiver 901 may be further configured to broadcast, after forwarding the first indication message to the first network device, a second indication message through the target interface. The second indication message is used to indicate that the first indication message has been forwarded to the first network device.

In this way, the first network device may not receive the first indication message for a plurality of times, so that signaling overheads on a Uu interface between the user equipment and the network device can be reduced.

In another feasible implementation, the processor 902 may be configured to: when the first indication message includes location information of the first user equipment, determine a distance between the user equipment and the first user equipment based on the location information.

The processor 902 may be further configured to: when the first indication message further includes a frequency of a cell for reestablishment serving the first user equipment, and the distance is less than or equal to a preset distance, perform signal measurement on a cell corresponding to the frequency, and report a measurement result to the first network device, so that the first network device performs cell handover on the user equipment 900 based on the measurement result.

The transceiver 901 may be further configured to: when the distance is less than or equal to a preset distance, send, to the first network device, a third indication message that is used to indicate that the distance between the user equipment 900 and the first user equipment is less than or equal to the preset distance, so that the first network device sends context information of the user equipment 900 to a third network device.

The third network device and the second network device may be a same network device or may be different network devices. This is not limited in this embodiment of the present invention.

In this way, the first network device can perform cell handover in advance on a user equipment that may have a connection failure, thereby reducing connection failures.

It can be learned that, according to the user equipment described in FIG. 8 or FIG. 9, the user equipment may forward, to a network device, an indication message of another nearby user equipment having a connection failure, so that the network device can push in advance context information of the another user equipment having the connection failure. Therefore, a communication delay between network devices and signaling overheads on an X2 interface can be reduced to some extent.

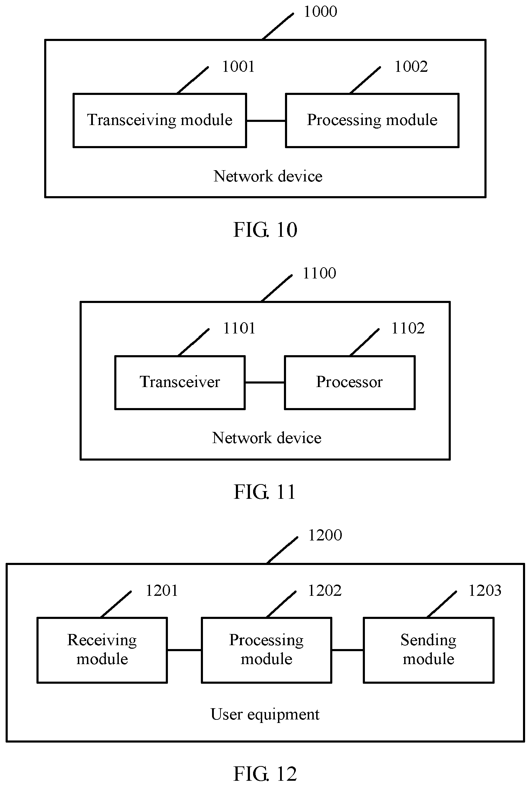

Based on the network architecture shown in FIG. 1, when UE 1 fails to establish a connection to a first network device through a Uu interface and needs to reconnect a second network device, an embodiment of the present invention discloses a network device, namely, a first network device. Referring to FIG. 10, FIG. 10 is a schematic structural diagram of a network device according to an embodiment of the present invention. The network device 1000 described in FIG. 10 may include a transceiving module 1001.

The transceiving module 1001 may be configured to receive a first indication message that is used to indicate that a connection failure occurs on first user equipment; and send context information of the first user equipment to a second network device based on the first indication message. The context information is used for establishing a connection between the second network device and the first user equipment.

In a feasible implementation, the network device 1000 may further include a processing module 1002.

The processing module 1002 may be configured to: when the first indication message includes a measurement report of the first user equipment, determine, based on the measurement report, a candidate cell for reestablishment of the first user equipment, and determine, as the second network device, a network device serving the candidate cell for reestablishment; or when the first indication message includes an identifier of a cell for reestablishment of the first user equipment, determine, as the second network device, a network device serving a cell for reestablishment identified by the identifier of a cell for reestablishment.

In another feasible implementation, the transceiving module 1001 may be further configured to receive a third indication message that is used to indicate that a distance between the second user equipment and the first user equipment is less than or equal to a preset distance, and send context information of the second user equipment to a third network device based on the third indication message.

The third network device and the second network device may be a same network device or may be different network devices. This is not limited in this embodiment of the present invention.

When a user equipment forwarding the first indication message is located near a user equipment having a connection failure, the network device sends, in advance to a neighboring network device, context information of the user equipment forwarding the first indication message, so that user equipment connection failures can be reduced.

Referring to FIG. 11, FIG. 11 is a schematic structural diagram of another network device according to an embodiment of the present invention. The network device 1100 described in FIG. 11 may include a transceiver 1101.

The transceiver 1101 may be configured to receive a first indication message that is used to indicate that a connection failure occurs on first user equipment; and send context information of the first user equipment to a second network device based on the first indication message. The context information is used for establishing a connection between the second network device and the first user equipment.

In a feasible implementation, the network device 1100 may further include a processor 1102.

The processor 1102 may be configured to: when the first indication message includes a measurement report of the first user equipment, determine, based on the measurement report, a candidate cell for reestablishment of the first user equipment, and determine, as the second network device, a network device serving the candidate cell for reestablishment; or when the first indication message includes an identifier of a cell for reestablishment of the first user equipment, determine, as the second network device, a network device serving a cell for reestablishment identified by the identifier of a cell for reestablishment.

In another feasible implementation, the transceiver 1101 may be further configured to receive a third indication message that is used to indicate that a distance between the second user equipment and the first user equipment is less than or equal to a preset distance, and send context information of the second user equipment to a third network device based on the third indication message.

The third network device and the second network device may be a same network device or may be different network devices. This is not limited in this embodiment of the present invention.

It can be learned that, according to the network device described in FIG. 10 or FIG. 11, after receiving an indication message that is used to indicate that a connection failure occurs on a user equipment, the network device (for example, a base station) can push context information of the user equipment to another network device in advance. In this way, the network device that is reconnected to the user equipment but does not have the context information of the user equipment does not need to obtain the context information from the network device in a reconnection process of the user equipment. Therefore, a communication delay between network devices and signaling overheads on an X2 interface can be reduced to some extent.

Based on the network architecture shown in FIG. 1, after UE 1 establishes a connection to a first network device through a Uu interface, an embodiment of the present invention discloses still another user equipment, namely, first user equipment. Referring to FIG. 12, FIG. 12 is a schematic structural diagram of still another user equipment according to an embodiment of the present invention. The user equipment 1200 described in FIG. 12 may include a receiving module 1201, a processing module 1202, and a sending module 1203. The receiving module 1201 and the sending module 1203 may be integrated into a same module. This is not limited in this embodiment of the present invention.

The receiving module 1201 may be configured to receive uplink timing information.

The uplink timing information includes a network parameter and a TA value corresponding to the network parameter.

The processing module 1202 may be configured to obtain, from the uplink timing information received by the receiving module 1201, a target TA value corresponding to a target network parameter that matches a network parameter of the user equipment 1200.

The sending module 1203 may be configured to send data to a network device based on the target TA value obtained by the processing module 1202.

In a feasible implementation, that the receiving module 1201 receives uplink timing information may be specifically as follows:
receiving, through a Uu interface, uplink timing information broadcast by the network device; or
receiving, through a target interface, uplink timing information broadcast by all user equipments in a target user equipment set.

In another feasible implementation, that the processing module 1202 obtains, from the uplink timing information, a target TA value corresponding to a target network parameter that matches a network parameter of the user equipment 1200 may be specifically as follows:
when the network parameter includes a signal quality range, and the signal quality range includes at least one of an RSRP range and an RSRQ range, determining, based on the signal quality range, a target signal quality range in which signal quality of the user equipment 1200 is located; and
obtaining a target TA value corresponding to the target signal quality range; or
when the network parameter includes location information, determining, from the location information, target location information corresponding to a target location that is a location corresponding to the location information and that is closest to a location of the user equipment 1200; and
obtaining a target TA value corresponding to the target location information.

In still another feasible implementation, that the receiving module 1201 receives, through a target interface, uplink timing information broadcast by all user equipments in a target user equipment set may be specifically as follows:
receiving, through the target interface, the uplink timing information broadcast at a specified power by all the user equipments in the target user equipment set.

That the processing module 1202 obtains, from the uplink timing information, a target TA value corresponding to a target network parameter that matches a network parameter of the user equipment 1200 may be specifically as follows:
obtaining, from uplink timing information carried in a target signal, the target TA value corresponding to the target network parameter that matches the network parameter of the user equipment 1200, where the target signal is a signal with a highest power in a set of signals that carry uplink timing information and that are received by the user terminal.

In this way, the target TA value finally obtained by the user equipment 1200 is a TA value of user equipment closest to the user equipment. Therefore, accuracy of obtaining the TA value can be improved.

In still another feasible implementation, the sending module 1203 may be further configured to report the target TA value and the network parameter of the user equipment 1200 to the network device after sending the data to the network device based on the target TA value.

Each user equipment continually updates and reports a TA value and a network parameter of each user equipment. Therefore, accuracy of obtaining a TA value of another user equipment can be improved.

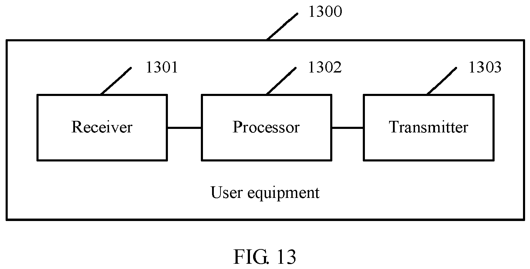

Referring to FIG. 13, FIG. 13 is a schematic structural diagram of still another user equipment according to an embodiment of the present invention. The user equipment 1300 described in FIG. 13 may include a receiver 1301, a processor 1302, and a transmitter 1303. The receiver 1301 and the transmitter 1303 may be integrated into a transceiver that has receiving and sending functions. This is not limited in this embodiment of the present invention.

The receiver 1301 may be configured to receive uplink timing information.

The uplink timing information includes a network parameter and a TA value corresponding to the network parameter.

The processor 1302 may be configured to obtain, from the uplink timing information received by the receiver 1301, a target TA value corresponding to a target network parameter that matches a network parameter of the user equipment 1300.

The transmitter 1303 may be configured to send data to a network device based on the target TA value obtained by the processor 1302.

In a feasible implementation, that the receiver 1301 receives uplink timing information may be specifically as follows:
receiving, through a Uu interface, uplink timing information broadcast by the network device; or
receiving, through a target interface, uplink timing information broadcast by all user equipments in a target user equipment set.

In another feasible implementation, that the processor 1302 obtains, from the uplink timing information, a target TA value corresponding to a target network parameter that matches a network parameter of the user equipment 1300 may be specifically as follows:
when the network parameter includes a signal quality range, and the signal quality range includes at least one of an RSRP range and an RSRQ range, determining, based on the signal quality range, a target signal quality range in which signal quality of the user equipment 1300 is located; and
obtaining a target TA value corresponding to the target signal quality range; or
when the network parameter includes location information, determining, from the location information, target location information corresponding to a target location that is a location corresponding to the location information and that is closest to a location of the user equipment 1300; and
obtaining a target TA value corresponding to the target location information.

In still another feasible implementation, that the receiver 1301 receives, through a target interface, uplink timing information broadcast by all user equipments in a target user equipment set may be specifically as follows:
receiving, through the target interface, the uplink timing information broadcast at a specified power by all the user equipments in the target user equipment set.

That the processor 1302 obtains, from the uplink timing information, a target TA value corresponding to a target network parameter that matches a network parameter of the user equipment 1300 may be specifically as follows:
obtaining, from uplink timing information carried in a target signal, the target TA value corresponding to the target network parameter that matches the network parameter of the user equipment 1300, where the target signal is a signal with a highest power in a set of signals that carry uplink timing information and that are received by the user terminal.

In this way, the target TA value finally obtained by the user equipment 1300 is a TA value of user equipment closest to the user equipment. Therefore, accuracy of obtaining the TA value can be improved.

In still another feasible implementation, the transmitter 1303 may be further configured to report the target TA value and the network parameter of the user equipment 1300 to the network device after sending the data to the network device based on the target TA value.

Each user equipment continually updates and reports a TA value and a network parameter of each user equipment. Therefore, accuracy of obtaining a TA value of another user equipment can be improved.

It can be learned that, according to the user equipment described in FIG. 12 or FIG. 13, when the user equipment is initially connected to the network device, or is in a moving state, or needs cell handover, the user equipment may obtain the uplink timing information broadcast by the network device or a nearby user equipment, to select, based on the uplink timing information, the target TA value corresponding to the target network parameter that matches the network parameter of the user equipment, and send the data to the network device based on the target TA value, so that the network device is synchronized when receiving the uplink data. According to this embodiment of the present invention, the user equipment does not obtain the uplink timing in a manner in which the network device sends the uplink timing to the user equipment. Instead, the user equipment uses the uplink timing of the nearby user equipment, or the uplink timing proactively broadcast by the network device. In this way, efficiency of the user equipment in obtaining the uplink timing can be improved. Therefore, a communication delay between the user equipment and the network device and signaling overheads on a Uu interface are reduced.

It should be noted that, in the foregoing embodiments, the description of each embodiment has respective focuses. For a part that is not described in detail in an embodiment, refer to related descriptions in other embodiments. In addition, a person skilled in the art should also appreciate that all the embodiments described in the specification are example embodiments, and the related actions and modules are not necessarily mandatory to the present invention.

A sequence of the steps of the method in the embodiments of the present invention may be adjusted, and some steps may also be combined or removed based on an actual requirement.

The modules in the user equipment and the network device in the embodiments of the present invention may be combined, divided, or deleted based on an actual requirement.

The user equipment and the network device in the embodiments of the present invention may be implemented by using a universal integrated circuit, for example, a CPU (central processing unit, central processing unit), or an ASIC (application specific integrated circuit, application-specific integrated circuit).

A person of ordinary skill in the art may understand that all or a part of the processes of the methods in the embodiments may be implemented by a computer program instructing related hardware. The program may be stored in a computer readable storage medium. When the program runs, the processes of the methods in the embodiments are performed. The foregoing storage medium may include: a magnetic disk, an optical disc, a read-only memory (Read-Only Memory, ROM), or a random access memory (Random Access Memory, RAM).

The foregoing describes in detail the communication method and the related device disclosed in the embodiments of the present invention. The principle and implementations of the present invention are described in the specification by using specific examples. The embodiments are merely described to help understand the present invention and core ideas of the present invention. In addition, a person of ordinary skill in the art can make modifications to the specific implementations and application scopes based on the ideas of the present invention. Therefore, the content of the specification shall not be construed as a limitation to the present invention.

## Claims

1. A communication method, wherein the method comprises:
sending, by a first user equipment, a first indication message to a first network device, so that the first network device sends context information of the first user equipment to a second network device, wherein the first indication message is used to indicate that a connection failure occurs on the first user equipment, and the context information is used for establishing a connection between the second network device and the first user equipment; and
establishing, by the first user equipment, the connection to the second network device.

2. The method according to claim 1, wherein the sending, by first user equipment, a first indication message to a first network device comprises:
sending, by the first user equipment, the first indication message to the first network device through a target interface, wherein the target interface is a communications interface between terminal devices; or
broadcasting, by the first user equipment, the first indication message through a target interface, to instruct a second user equipment to forward the first indication message to the first network device, wherein a destination node of the first indication message is the first network device, the second user equipment is user equipment connected to the first network device, and the target interface is a communications interface between terminal devices.

3. The method according to claim 2, wherein the broadcasting, by the first user equipment, the first indication message through a target interface comprises:
broadcasting, by the first user equipment, the first indication message at a specified power through the target interface, so that the first indication message is received by user equipment within a preset distance range.

4. The method according to any one of claims 1 to 3, wherein the first indication message comprises a measurement report of the first user equipment, and the second network device is a network device that is determined by the first network device based on the measurement report and that serves a candidate cell for reestablishment of the first user equipment; or
the first indication message comprises an identifier of a cell for reestablishment of the first user equipment, and the second network device is a network device serving a cell for reestablishment identified by the identifier of a cell for reestablishment.

5. A communication method, wherein the method comprises:
receiving, by a second user equipment, a first indication message broadcast by a first user equipment through a target interface, wherein the first indication message is used to indicate that a connection failure occurs on the first user equipment, a destination node of the first indication message is a first network device, and the target interface is a communications interface between terminal devices; and
forwarding, by the second user equipment, the first indication message to the first network device, so that the first network device sends context information of the first user equipment to a second network device, wherein the context information is used for establishing a connection between the second network device and the first user equipment.

6. The method according to claim 5, wherein after the forwarding, by the second user equipment, the first indication message to the first network device, the method further comprises:
broadcasting, by the second user equipment, a second indication message through the target interface, wherein the second indication message is used to indicate that the first indication message has been forwarded to the first network device.

7. The method according to claim 5 or 6, wherein the method further comprises:
when the first indication message comprises location information of the first user equipment, determining, by the second user equipment, a distance between the second user equipment and the first user equipment based on the location information; and
when the first indication message further comprises a frequency of a cell for reestablishment serving the first user equipment, and the distance is less than or equal to a preset distance, performing, by the second user equipment, signal measurement on a cell corresponding to the frequency, and reporting a measurement result to the first network device, so that the first network device performs cell handover on the second user equipment based on the measurement result; or
when the distance is less than or equal to the preset distance, sending, to the first network device by the second user equipment, a third indication message that is used to indicate that the distance between the second user equipment and the first user equipment is less than or equal to the preset distance, so that the first network device sends context information of the second user equipment to a third network device.

8. The method according to claim 5 or 6, wherein the first indication message comprises a measurement report of the first user equipment, and the second network device is a network device that is determined by the first network device based on the measurement report and that serves a candidate cell for reestablishment of the first user equipment; or
the first indication message comprises an identifier of a cell for reestablishment of the first user equipment, and the second network device is a network device serving a cell for reestablishment identified by the identifier of a cell for reestablishment.

9. A communication method, wherein the method comprises:
receiving, by a first network device, a first indication message that is used to indicate that a connection failure occurs on a first user equipment; and
sending, by the first network device, context information of the first user equipment to a second network device based on the first indication message, wherein the context information is used for establishing a connection between the second network device and the first user equipment.

10. The method according to claim 9, wherein the first indication message is sent by the first user equipment to the first network device through a target interface, and the target interface is a communications interface between terminal devices; or
a destination node of the first indication message is the first network device, the first indication message is forwarded by a second user equipment to the first network device after receiving, through a target interface, the first indication message broadcast by the first user equipment, the second user equipment is user equipment connected to the first network device, and the target interface is a communications interface between terminal devices.

11. The method according to claim 9 or 10, wherein before the sending, by the first network device, context information of the first user equipment to a second network device based on the first indication message, the method further comprises:
when the first indication message comprises a measurement report of the first user equipment, determining, by the first network device based on the measurement report, a candidate cell for reestablishment of the first user equipment, and determining, as the second network device, a network device serving the candidate cell for reestablishment; or
when the first indication message comprises an identifier of a cell for reestablishment of the first user equipment, determining, as the second network device by the first network device, a network device serving a cell for reestablishment identified by the identifier of a cell for reestablishment.

12. The method according to any one of claims 9 to 11, wherein the method further comprises:
receiving, by the first network device, a third indication message that is used to indicate that a distance between the second user equipment and the first user equipment is less than or equal to a preset distance; and
sending, by the first network device, context information of the second user equipment to a third network device based on the third indication message.

13. A communication method, wherein the method comprises:
receiving, by a user equipment, uplink timing information that comprises a network parameter and a TA value corresponding to the network parameter;
obtaining, from the uplink timing information by the user equipment, a target TA value corresponding to a target network parameter that matches a network parameter of the user equipment; and
sending, by the user equipment, data to a network device based on the target TA value.

14. The method according to claim 13, wherein the receiving, by user equipment, uplink timing information comprises:
receiving, by the user equipment, uplink timing information broadcast by the network device.

15. The method according to claim 13 or 14, wherein after the sending, by the user equipment, data to a network device based on the target TA value, the method further comprises:
reporting, by the user equipment, the target TA value and the network parameter of the user equipment to the network device.

16. The method according to claim 13, wherein the receiving, by user equipment, uplink timing information comprises:
receiving, by the user equipment through a target interface, uplink timing information broadcast by all user equipments in a target user equipment set, wherein the target interface is a communications interface between equipments.

17. The method according to claim 16, wherein the receiving, by the user equipment through a target interface, uplink timing information broadcast by all user equipments in a target user equipment set comprises:
receiving, by the user equipment through the target interface, the uplink timing information broadcast at a specified power by all the user equipments in the target user equipment set; and
the obtaining, from the uplink timing information by the user equipment, a target TA value corresponding to a target network parameter that matches a network parameter of the user equipment comprises:
obtaining, by the user equipment from uplink timing information carried in a target signal, the target TA value corresponding to the target network parameter that matches the network parameter of the user equipment, wherein the target signal is a signal with a highest power in a set of signals that carry uplink timing information and that are received by the user equipment.

18. The method according to any one of claims 13 to 16, wherein the obtaining, from the uplink timing information by the user equipment, a target TA value corresponding to a target network parameter that matches a network parameter of the user equipment comprises:
when the network parameter comprises a signal quality range, and the signal quality range comprises at least one of a signal to interference plus noise ratio SINR range, a reference signal received power RSRP range, and a reference signal received quality RSRQ range, determining, by the user equipment based on the signal quality range, a target signal quality range in which signal quality of the user equipment is located; and
obtaining, by the user equipment, a target TA value corresponding to the target signal quality range.

19. The method according to any one of claims 13 to 16, wherein the obtaining, from the uplink timing information by the user equipment, a target TA value corresponding to a target network parameter that matches a network parameter of the user equipment comprises:
when the network parameter comprises location information, determining, from the location information by the user equipment, target location information corresponding to a target location that is a location corresponding to the location information and that is closest to a location of the user equipment; and
obtaining, by the user equipment, a target TA value corresponding to the target location information.

20. A user equipment, wherein the user equipment comprises:
a transceiving module, configured to send a first indication message to a first network device, so that the first network device sends context information of the user equipment to a second network device, wherein the first indication message is used to indicate that a connection failure occurs on the user equipment, and the context information is used for establishing a connection between the second network device and the user equipment; and
a processing module, configured to establish a connection to the second network device.

21. The user equipment according to claim 20, wherein that the transceiving module sends a first indication message to a first network device is specifically as follows:
sending the first indication message to the first network device through a target interface, wherein the target interface is a communications interface between terminal devices; or
broadcasting the first indication message through a target interface, to instruct a second user equipment to forward the first indication message to the first network device, wherein a destination node of the first indication message is the first network device, the second user equipment is a user equipment connected to the first network device, and the target interface is a communications interface between terminal devices.

22. The user equipment according to claim 21, wherein that the transceiving module broadcasts the first indication message through a target interface is specifically as follows:
broadcasting the first indication message at a specified power through the target interface, so that the first indication message is received by a user equipment within a preset distance range.

23. The user equipment according to any one of claims 20 to 22, wherein the first indication message comprises a measurement report of the user equipment, and the second network device is a network device that is determined by the first network device based on the measurement report and that serves a candidate cell for reestablishment serving the user equipment; or
the first indication message comprises an identifier of a cell for reestablishment of the user equipment, and the second network device is a network device serving a cell for reestablishment identified by the identifier of a cell for reestablishment.

24. A user equipment, wherein the user equipment comprises:
a transceiver, configured to send a first indication message to a first network device, so that the first network device sends context information of the user equipment to a second network device, wherein the first indication message is used to indicate that a connection failure occurs on the user equipment, and the context information is used for establishing a connection between the second network device and the user equipment; and
a processor, configured to establish a connection to the second network device.

25. The user equipment according to claim 24, wherein that the transceiver sends a first indication message to a first network device is specifically as follows:
sending the first indication message to the first network device through a target interface, wherein the target interface is a communications interface between terminal devices; or
broadcasting the first indication message through a target interface, to instruct a second user equipment to forward the first indication message to the first network device, wherein a destination node of the first indication message is the first network device, the second user equipment is a user equipment connected to the first network device, and the target interface is a communications interface between terminal devices.

26. The user equipment according to claim 25, wherein that the transceiver broadcasts the first indication message through a target interface is specifically as follows:
broadcasting the first indication message at a specified power through the target interface, so that the first indication message is received by user equipment within a preset distance range.

27. The user equipment according to any one of claims 24 to 26, wherein the first indication message comprises a measurement report of the user equipment, and the second network device is a network device that is determined by the first network device based on the measurement report and that serves a candidate cell for reestablishment serving the user equipment; or
the first indication message comprises an identifier of a cell for reestablishment of the user equipment, and the second network device is a network device serving a cell for reestablishment identified by the identifier of a cell for reestablishment.

28. A user equipment, wherein the user equipment comprises:
a transceiving module, configured to receive a first indication message broadcast by a first user equipment through a target interface, wherein the first indication message is used to indicate that a connection failure occurs on the first user equipment, a destination node of the first indication message is a first network device, and the target interface is a communications interface between terminal devices; and
the transceiving module is further configured to forward the first indication message to the first network device, so that the first network device sends context information of the first user equipment to a second network device, wherein the context information is used for establishing a connection between the second network device and the first user equipment.

29. The user equipment according to claim 28, wherein:
the transceiving module is further configured to broadcast, after forwarding the first indication message to the first network device, a second indication message through the target interface, wherein the second indication message is used to indicate that the first indication message has been forwarded to the first network device.

30. The user equipment according to claim 28 or 29, wherein the user equipment further comprises:
a processing module, configured to: when the first indication message comprises location information of the first user equipment, determine a distance between the user equipment and the first user equipment based on the location information; and
the processing module is further configured to: when the first indication message further comprises a frequency of a cell for reestablishment serving the first user equipment, and the distance is less than or equal to a preset distance, perform signal measurement on a cell corresponding to the frequency, and report a measurement result to the first network device, so that the first network device performs cell handover on the user equipment based on the measurement result; or
the transceiving module is further configured to: when the distance is less than or equal to a preset distance, send, to the first network device, a third indication message that is used to indicate that the distance between the user equipment and the first user equipment is less than or equal to the preset distance, so that the first network device sends context information of the user equipment to a third network device.

31. The user equipment according to claim 28 or 29, wherein the first indication message comprises a measurement report of the first user equipment, and the second network device is a network device that is determined by the first network device based on the measurement report and that serves a candidate cell for reestablishment of the first user equipment; or
the first indication message comprises an identifier of a cell for reestablishment of the first user equipment, and the second network device is a network device serving a cell for reestablishment identified by the identifier of a cell for reestablishment.

32. A user equipment, wherein the user equipment comprises:
a transceiver, configured to receive a first indication message broadcast by a first user equipment through a target interface, wherein the first indication message is used to indicate that a connection failure occurs on the first user equipment, a destination node of the first indication message is a first network device, and the target interface is a communications interface between terminal devices; and
the transceiver is further configured to forward the first indication message to the first network device, so that the first network device sends context information of the first user equipment to a second network device, wherein the context information is used for establishing a connection between the second network device and the first user equipment.

33. The user equipment according to claim 32, wherein:
the transceiver is further configured to broadcast, after forwarding the first indication message to the first network device, a second indication message through the target interface, wherein the second indication message is used to indicate that the first indication message has been forwarded to the first network device.

34. The user equipment according to claim 32 or 33, wherein the user equipment further comprises:
a processor, configured to: when the first indication message comprises location information of the first user equipment, determine a distance between the user equipment and the first user equipment based on the location information; and
the processor is further configured to: when the first indication message further comprises a frequency of a cell for reestablishment serving the first user equipment, and the distance is less than or equal to a preset distance, perform signal measurement on a cell corresponding to the frequency, and report a measurement result to the first network device, so that the first network device performs cell handover on the user equipment based on the measurement result; or
the transceiver is further configured to: when the distance is less than or equal to a preset distance, send, to the first network device, a third indication message that is used to indicate that the distance between the user equipment and the first user equipment is less than or equal to the preset distance, so that the first network device sends context information of the user equipment to a third network device.

35. The user equipment according to claim 32 or 33, wherein the first indication message comprises a measurement report of the first user equipment, and the second network device is a network device that is determined by the first network device based on the measurement report and that serves a candidate cell for reestablishment of the first user equipment; or
the first indication message comprises an identifier of a cell for reestablishment of the first user equipment, and the second network device is a network device serving a cell for reestablishment identified by the identifier of a cell for reestablishment.

36. A network device, wherein the network device comprises:
a transceiving module, configured to receive a first indication message that is used to indicate that a connection failure occurs on a first user equipment; and
the transceiving module is further configured to send context information of the first user equipment to a second network device based on the first indication message, wherein the context information is used for establishing a connection between the second network device and the first user equipment.

37. The network device according to claim 36, wherein the first indication message is sent by the first user equipment to the network device through a target interface, and the target interface is a communications interface between terminal devices; or
a destination node of the first indication message is the network device, the first indication message is forwarded by a second user equipment to the network device after receiving, through a target interface, the first indication message broadcast by the first user equipment, the second user equipment is a user equipment connected to the network device, and the target interface is a communications interface between terminal devices.

38. The network device according to claim 36 or 37, wherein the network device further comprises:
a processing module, configured to: when the first indication message comprises a measurement report of the first user equipment, determine, based on the measurement report, a candidate cell for reestablishment of the first user equipment, and determine, as the second network device, a network device serving the candidate cell for reestablishment; or when the first indication message comprises an identifier of a cell for reestablishment of the first user equipment, determine, as the second network device, a network device serving a cell for reestablishment identified by the identifier of a cell for reestablishment.

39. The network device according to any one of claims 36 to 38, wherein:
the transceiving module is further configured to receive a third indication message that is used to indicate that a distance between the second user equipment and the first user equipment is less than or equal to a preset distance, and send context information of the second user equipment to a third network device based on the third indication message.

40. A network device, wherein the network device comprises:
a transceiver, configured to receive a first indication message that is used to indicate that a connection failure occurs on first user equipment; and
the transceiver is further configured to send context information of the first user equipment to a second network device based on the first indication message, wherein the context information is used for establishing a connection between the second network device and the first user equipment.

41. The network device according to claim 40, wherein the first indication message is sent by the first user equipment to the network device through a target interface, and the target interface is a communications interface between terminal devices; or
a destination node of the first indication message is the network device, the first indication message is forwarded by second user equipment to the network device after receiving, through a target interface, the first indication message broadcast by the first user equipment, the second user equipment is a user equipment connected to the network device, and the target interface is a communications interface between terminal devices.

42. The network device according to claim 40 or 41, wherein the network device further comprises:
a processor, configured to: when the first indication message comprises a measurement report of the first user equipment, determine, based on the measurement report, a candidate cell for reestablishment of the first user equipment, and determine, as the second network device, a network device serving the candidate cell for reestablishment; or when the first indication message comprises an identifier of a cell for reestablishment of the first user equipment, determine, as the second network device, a network device serving a cell for reestablishment identified by the identifier of a cell for reestablishment.

43. The network device according to any one of claims 40 to 42, wherein:
the transceiver is further configured to receive a third indication message that is used to indicate that a distance between the second user equipment and the first user equipment is less than or equal to a preset distance, and send context information of the second user equipment to a third network device based on the third indication message.

44. A user equipment, wherein the user equipment comprises:
a receiving module, configured to receive uplink timing information that comprises a network parameter and a TA value corresponding to the network parameter;
a processing module, configured to obtain, from the uplink timing information, a target TA value corresponding to a target network parameter that matches a network parameter of the user equipment; and
a sending module, configured to send data to a network device based on the target TA value.

45. The user equipment according to claim 44, wherein that the receiving module receives uplink timing information is specifically as follows:
receiving uplink timing information broadcast by the network device.

46. The user equipment according to claim 44 or 45, wherein:
the sending module is further configured to report the target TA value and the network parameter of the user equipment to the network device after sending the data to the network device based on the target TA value.

47. The user equipment according to claim 44, wherein that the receiving module receives uplink timing information is specifically as follows:
receiving, through a target interface, uplink timing information broadcast by all user equipments in a target user equipment set, wherein the target interface is a communications interface between equipments.

48. The user equipment according to claim 47, wherein that the receiving module receives, through a target interface, uplink timing information broadcast by all user equipments in a target user equipment set is specifically as follows:
receiving, through the target interface, the uplink timing information broadcast at a specified power by all the user equipments in the target user equipment set; and
that the processing module obtains, from the uplink timing information, a target TA value corresponding to a target network parameter that matches a network parameter of the user equipment is specifically as follows:
obtaining, from uplink timing information carried in a target signal, the target TA value corresponding to the target network parameter that matches the network parameter of the user equipment, wherein the target signal is a signal with a highest power in a set of signals that carry uplink timing information and that are received by the user equipment.

49. The user equipment according to any one of claims 44 to 47, wherein that the processing module obtains, from the uplink timing information, a target TA value corresponding to a target network parameter that matches a network parameter of the user equipment is specifically as follows:
when the network parameter comprises a signal quality range, and the signal quality range comprises at least one of an SINR range, an RSRP range, and an RSRQ range, determining, based on the signal quality range, a target signal quality range in which signal quality of the user equipment is located; and
obtaining a target TA value corresponding to the target signal quality range.

50. The user equipment according to any one of claims 44 to 47, wherein that the processing module obtains, from the uplink timing information, a target TA value corresponding to a target network parameter that matches a network parameter of the user equipment is specifically as follows:
when the network parameter comprises location information, determining, from the location information, target location information corresponding to a target location that is a location corresponding to the location information and that is closest to a location of the user equipment; and
obtaining a target TA value corresponding to the target location information.

51. A user equipment, wherein the user equipment comprises:
a receiver, configured to receive uplink timing information that comprises a network parameter and a TA value corresponding to the network parameter;
a processor, configured to obtain, from the uplink timing information, a target TA value corresponding to a target network parameter that matches a network parameter of the user equipment; and
a transmitter, configured to send data to a network device based on the target TA value.

52. The user equipment according to claim 51, wherein that the receiver receives uplink timing information is specifically as follows:
receiving uplink timing information broadcast by the network device.

53. The user equipment according to claim 51 or 52, wherein:
the transmitter is further configured to report the target TA value and the network parameter of the user equipment to the network device after sending the data to the network device based on the target TA value.

54. The user equipment according to claim 51, wherein that the receiver receives uplink timing information is specifically as follows:
receiving, through a target interface, uplink timing information broadcast by all user equipments in a target user equipment set, wherein the target interface is a communications interface between equipments.

55. The user equipment according to claim 54, wherein that the receiver receives, through a target interface, uplink timing information broadcast by all user equipments in a target user equipment set is specifically as follows:
receiving, through the target interface, the uplink timing information broadcast at a specified power by all the user equipments in the target user equipment set; and
that the processor obtains, from the uplink timing information, a target TA value corresponding to a target network parameter that matches a network parameter of the user equipment is specifically as follows:
obtaining, from uplink timing information carried in a target signal, the target TA value corresponding to the target network parameter that matches the network parameter of the user equipment, wherein the target signal is a signal with a highest power in a set of signals that carry uplink timing information and that are received by the user equipment.

56. The user equipment according to any one of claims 51 to 54, wherein that the processor obtains, from the uplink timing information, a target TA value corresponding to a target network parameter that matches a network parameter of the user equipment is specifically as follows:
when the network parameter comprises a signal quality range, and the signal quality range comprises at least one of an SINR range, an RSRP range, and an RSRQ range, determining, based on the signal quality range, a target signal quality range in which signal quality of the user equipment is located; and
obtaining a target TA value corresponding to the target signal quality range.

57. The user equipment according to any one of claims 51 to 54, wherein that the processor obtains, from the uplink timing information, a target TA value corresponding to a target network parameter that matches a network parameter of the user equipment is specifically as follows:
when the network parameter comprises location information, determining, from the location information, target location information corresponding to a target location that is a location corresponding to the location information and that is closest to a location of the user equipment; and
obtaining a target TA value corresponding to the target location information.
